# FASCICULE DE BREVET EUROPEEN

(11) **EP 3 001 132 B1**
(45) Date de publication et mention de la délivrance du brevet: **23.11.2016**
(21) Numéro de dépôt: 15186461.8
(22) Date de dépôt: 23.09.2015
(51) Int. Cl.: F28F 9/02, F02B 29/04

(54) **PROCÉDÉ DE FABRICATION D'UN ÉCHANGEUR DE CHALEUR**
HERSTELLUNGSVERFAHREN EINES WÄRMETAUSCHERS
METHOD FOR MANUFACTURING A HEAT EXCHANGER

(30) Priorité: 23.09.2014 FR 1458945
(43) Date de publication de la demande: 30.03.2016
(73) Titulaire: VALEO SYSTEMES THERMIQUES, 78320 Le Mesnil Saint-Denis (FR)
(72) Inventeur: DEVEDEUX, Sébastien, 78000 VERSAILLES (FR); ODILLARD, Laurent, 72390 LE LUART (FR); FERLAY, Benjamin, 78720 CERNAY LA VILLE (FR)
(74) Mandataire: Metz, Gaëlle

(56) Documents cités:
- WO-A1-2011/073038
- WO-A1-2013/174720
- WO-A1-2014/016255
- FR-A1- 2 968 753

## Description

L'invention se rapporte à un procédé de fabrication d'un échangeur de chaleur selon le préambule de la revendication 1. Un tel procédé est connu de WO 2011/073038.

Un échangeur de chaleur, comme par exemple un refroidisseur d'air de suralimentation, comporte généralement un faisceau d'échange de chaleur comprenant des tubes à l'intérieur desquels circule un premier fluide caloporteur. L'échangeur de chaleur comprend également des boites d'entrée et de sortie d'un second fluide caloporteur, ici l'air de suralimentation en provenance d'un turbocompresseur. Les boites d'entrée et de sortie sont fixées au faisceau d'échange de chaleur de sorte que le second fluide caloporteur circule entre les tubes et puisse échanger de l'énergie calorifique avec le premier fluide caloporteur.

Lors du procédé de fabrication de l'échangeur de chaleur, les boites sont fixées au faisceau d'échange de chaleur au moyen d'un dispositif de fixation. Ce dispositif de fixation peut par exemple être une lamelle métallique sur la périphérie du faisceau d'échange de chaleur qui est rabattue par des outils de sertissage sur la boite afin de la sertir.

Cependant, dans le cas ou les boites ont une conformation particulière, il est possible que les outils permettant la fixation de ladite boite sur le faisceau d'échange de chaleur ne puisse atteindre le dispositif de fixation.

Ainsi, un des buts de la présente invention est de remédier au moins partiellement aux inconvénients de l'art antérieur et de proposer un procédé de fabrication d'échangeur de chaleur où la fixation des boites sur le faisceau d'échange de chaleur est améliorée.

La présente invention concerne donc un procédé de fabrication d'un échangeur de chaleur, ledit échangeur de chaleur comportant :
- un faisceau d'échange de chaleur comprenant des tubes dans lesquels circule un premier fluide caloporteur entre une entrée et une sortie dudit premier fluide caloporteur,
- au moins une boite d'entrée ou de sortie d'un second fluide caloporteur et comportant une zone d'appui,
- au moins un dispositif de fixation de la boite sur le faisceau d'échange de chaleur, ledit dispositif de fixation comportant une base sur laquelle est destinée à reposer la zone d'appui de la boite,
la boite comportant au moins un épaulement orienté vers l'extérieur de ladite boite au niveau de sa zone d'appui et le dispositif de fixation comportant sur un de ses côtés au moins un rebord orienté vers l'intérieur du faisceau d'échange de chaleur et s'étendant parallèlement à la base,
ledit procédé comportant les étapes suivantes de mise en place d'au moins une boite:
- mise en contact de l'épaulement et du rebord au niveau de la face dudit rebord en vis-à-vis avec la base,
- pivotement de la boite autour de l'axe formé par le contact entre l'épaulement et le rebord de sorte que la zone d'appui de la boite repose contre la base du dispositif de fixation et que l'épaulement s'insère entre le rebord et la base,
- fixation de la boite audit faisceau d'échange de chaleur.

La présence du rebord permet de coincer l'épaulement entre ledit rebord et la base avant la fixation de la boite. Un des cotés de la boite est donc bloqué et ne nécessitera ensuite pas de fixation par un autre moyen sur ce côté. Ainsi, la boite peut avoir une conformation particulière qui autrement bloquerait l'accès à ce coté aux outils de fixation et qui donc empêcherait une fixation de ce côté.

Selon aspect de l'invention, la fixation de la boite audit faisceau d'échange de chaleur est réalisée par sertissage.

Selon un autre aspect de l'invention, un joint d'étanchéité est disposé entre la zone d'appui de la boite et la base du dispositif de fixation.

Selon un autre aspect de l'invention, le joint d'étanchéité est disposé dans une gorge au sein de la base du dispositif de fixation.

Selon un autre aspect de l'invention, l'épaulement comporte un chanfrein sur son arrête extérieure en vis-à-vis de la base du dispositif de fixation.

Selon un autre aspect de l'invention, l'épaulement comporte un renfoncement sur sa face destinée à entrée au contact du rebord.

Selon un autre aspect de l'invention, le dispositif de fixation comporte une paroi latérale et le rebord est réalisé par pliage de ladite paroi latérale vers l'intérieur dudit dispositif de fixation.

Selon un autre aspect de l'invention, le dispositif de fixation comporte une paroi latérale et le rebord est réalisé par formation d'au moins un orifice dans la paroi latérale du dispositif de fixation.

Selon un autre aspect de l'invention, le dispositif de fixation vient de matière avec le faisceau d'échange de chaleur.

Selon un autre aspect de l'invention, le dispositif de fixation est un collecteur fixé sur la périphérie du faisceau d'échange de chaleur.

Selon un autre aspect de l'invention, le collecteur présente un retrait par rapport au bord du faisceau d'échange de chaleur.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique en perspective d'un échangeur de chaleur,
- la figure 2 montre une représentation schématique en coupe d'une zone de fixation d'une boite sur un faisceau d'échange de chaleur lors d'une étape du procédé de fabrication,
- la figure 3 montre une représentation schématique en coupe de la zone de fixation de la figure 3 lors d'une étape autre du procédé de fabrication,
- les figures 4A et 4B montrent une représentation schématique de l'échangeur de chaleur lors des étapes montrées aux figures 2 et 3,
- la figure 5 montre une représentation schématique en perspective d'un dispositif de fixation selon un premier mode de réalisation,
- la figure 6 montre une représentation schématique en coupe d'une zone de fixation d'une boite sur un faisceau d'échange de chaleur après fixation selon un mode de réalisation particulier,
- les figures 7A et 7B montrent montre une représentation schématique en coupe d'une zone de fixation d'une boite sur un faisceau d'échange de chaleur selon un mode de réalisation alternatif lors de deux étapes du procédé de fabrication,
- la figure 8 montre une représentation schématique en perspective d'un dispositif de fixation selon un second mode de réalisation.

Sur les différentes figures, les éléments identiques portent les mêmes numéros de référence.

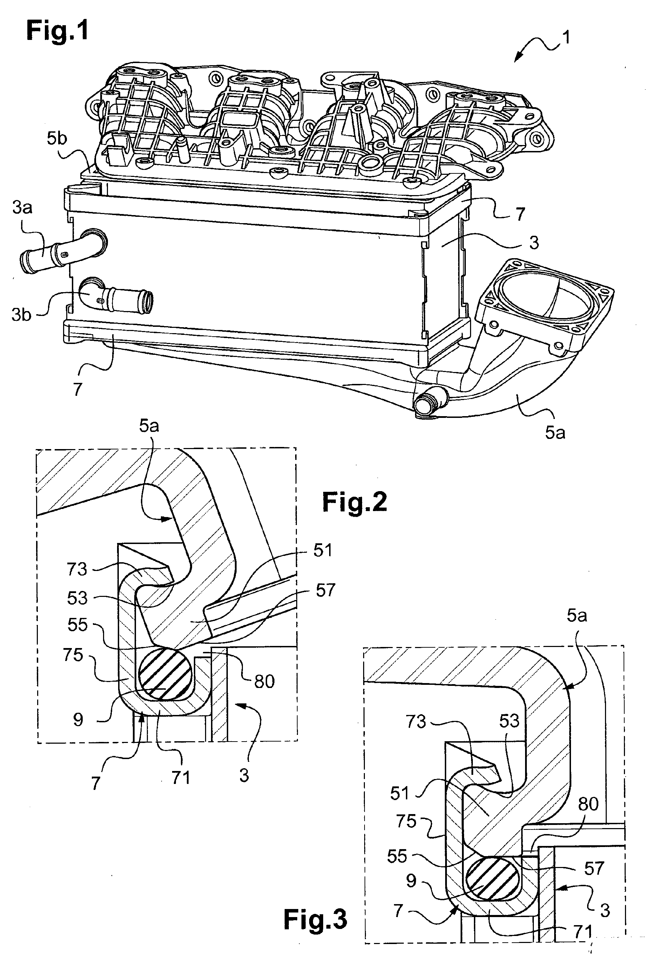

Comme l'illustre la figure 1 montrant une représentation schématique en perspective d'un échangeur de chaleur 1, ici un refroidisseur d'air de suralimentation, ce dernier comporte :
- un faisceau d'échange de chaleur 3 comprenant des tubes (non visibles) dans lesquels circule un premier fluide caloporteur entre une entrée 3a et une sortie 3b dudit premier fluide caloporteur,
- au moins une boite d'entrée 5a ou de sortie 5b d'un second fluide caloporteur, et
- au moins un dispositif de fixation 7 de la boite 5a, 5b sur le faisceau d'échange de chaleur 3.

Comme le montrent plus en détail les figures 2 et 3, le dispositif de fixation 7 comporte une base 71 sur laquelle est destinée à reposer une zone d'appui 57 de la boite 5a, 5b. Le dispositif de fixation 7 comporte en outre, sur un de ses côtés, au moins un rebord 73 orienté vers l'intérieur du faisceau d'échange de chaleur 3 et s'étendant parallèlement à la base 71. La boite 5a, 5b comporte quant à elle au moins un épaulement 51 orienté vers l'extérieur de ladite boite 5a, 5b. Cet épaulement est disposé au niveau de sa zone d'appui 57.

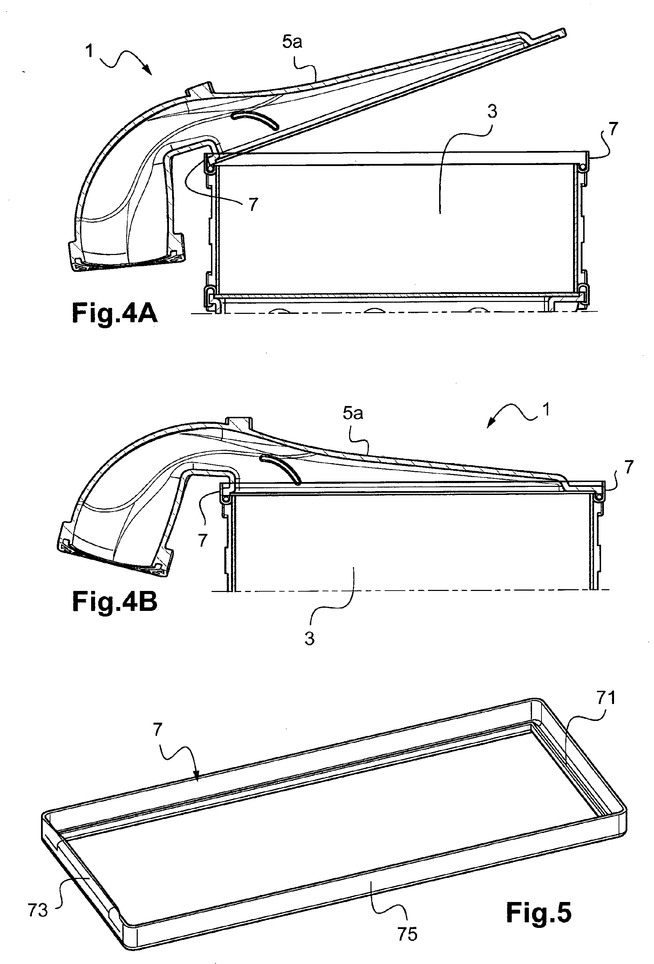

Lors du procédé de fabrication de l'échangeur de chaleur 1, la mise en place de la boite peut ainsi comprendre les étapes suivantes :
- mise en contact de l'épaulement 51 et du rebord 73 au niveau de la face dudit rebord 73 en vis-à-vis avec la base 71, comme illustré à la figure 2. Lors de cette étape, la boite 5a, 5b est inclinée par rapport au faisceau d'échange de chaleur comme le montre la figure 4A.
- pivotement de la boite 5a, 5b autour de l'axe formé par le contact entre l'épaulement 51 et le rebord 73 de sorte que la zone d'appui 57 de la boite 5a, 5b repose contre la base 71 du dispositif de fixation 7 et ainsi insérer l'épaulement 51 entre le rebord 73 et la base 51, comme illustré sur la figure 3. Cette étape permet également de plaquer la zone d'appui 57 de la boite 5a, 5b contre la base 71 du dispositif de fixation 7 sur toute sa périphérie comme le montre la figure 4B.
- fixation de la boite 5a, 5b au faisceau d'échange de chaleur 3.

La présence du rebord 73 permet de coincer l'épaulement 51 entre ledit rebord 73 et la base 71 avant la fixation de la boite 5a, 5b. Un des cotés de la boite 5a, 5b est donc bloqué et ne nécessitera ensuite pas de fixation par un autre moyen sur ce côté. Ainsi, la boite 5a, 5b peut avoir une conformation particulière qui autrement bloquerait l'accès à ce coté aux outils de fixation et qui donc empêcherait une fixation de ce côté.

Afin d'assurer l'étanchéité de la fixation des boites 5a, 5b contre le faisceau d'échange de chaleur 3, un joint d'étanchéité 9 peut être placé entre la zone d'appui 57 de la boite 5a, 5b et la base 71 du dispositif de fixation 7. Lorsque la boite est fixée, le joint d'étanchéité 9 est comprimé entre la zone d'appui 57 et la base 71 comme cela est illustré aux figures 3, 6 et 7B. Le joint d'étanchéité peut notamment être disposé dans une gorge au sein de la base 71 du dispositif de fixation 7 comme le montre les différentes figures. Cependant, il est néanmoins tout à fait possible d'imaginer que le joint d'étanchéité 9 puisse être intégré directement à la zone d'appui 57.

Dans le cas où le joint d'étanchéité 9 est disposé dans une gorge au sein de la base 71, l'épaulement 51 peut comporter un chanfrein 55 sur son arrête extérieure en vis-à-vis de la base 71 du dispositif de fixation 7 (voir figures 2 et 3). Ce chanfrein 55 permet, lors du pivotement de la boite 5a, 5b, de ne pas accrocher le joint d'étanchéité 9 avec l'arrête de l'épaulement 51 et ainsi évite que ledit joint d'étanchéité 9 soit extirpé de la gorge et réduise l'étanchéité de la fixation.

Comme le montrent les figures 2 à 8, le dispositif de fixation 7 peut comporter une paroi latérale 75.

Selon un premier mode de réalisation illustré aux figures 2, 3 et 5, le rebord 73 peut être réalisé par pliage de ladite paroi latérale 75 vers l'intérieur du dispositif de fixation 7. Cela est particulièrement visible sur la figure 5 montrant un dispositif de fixation 7 isolé avec un rebord 73.

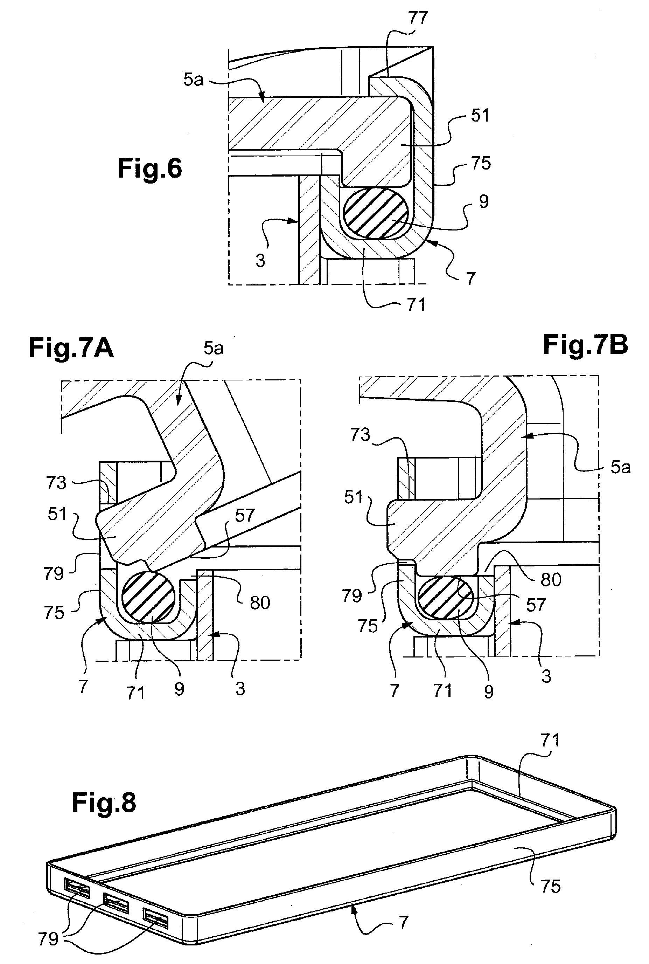

Selon un second mode de réalisation illustré aux figures 7A, 7B et 8, le rebord 73 peut être réalisé par formation d'au moins un orifice 79 dans la paroi latérale 75. Dans ce mode de réalisation, la boite 5a, 5b comporte autant d'épaulements 51 que d'orifices 79 de sorte que lesdits épaulements 51 puissent s'insérer dans les orifices 79.

La dernière étape de fixation de la 5a, 5b peut être réalisée par sertissage comme illustré par la figure 6. Ce sertissage est réalisé plus particulièrement par repliement de la paroi latérale 75 sur au moins le coté du dispositif de fixation 7 opposé à celui comportant le rebord 73. Néanmoins il est tout à fait possible d'imaginer d'autre moyen de fixation connu de l'homme du métier comme par exemple au moyen de vis ou de crochets.

L'épaulement 51 peut également comporter un renfoncement 53 sur sa face destinée à entrer en contact avec le rebord 73. Ce renfoncement 53 facilite la mise en place de l'épaulement 51 contre ledit rebord 73 et son pivotement.

Le dispositif de fixation 7 peut venir de matière avec le faisceau d'échange de chaleur ou bien il peut être un collecteur fixé sur la périphérie du faisceau de chaleur 3, par exemple par brasage. Pour faciliter le passage de l'épaulement 51 entre le rebord 73 et la base 71, le collecteur 7 peut présenter un retrait 80 par rapport au bord du faisceau d'échange de chaleur 3.

Afin d'assurer l'étanchéité de la fixation des boites 5a, 5b contre le faisceau d'échange de chaleur 3, un joint d'étanchéité 9 peut être placé entre la zone d'appui 57 de la boite 5a, 5b et la base 71 du dispositif de fixation 7. Lorsque la boite est fixée, le joint d'étanchéité 9 est comprimé entre la zone d'appui 57 et la base 71 comme cela est illustré aux figures 3, 6 et 7B. Le joint d'étanchéité peut notamment être disposé dans une gorge au sein de la base 71 du dispositif de fixation 7 comme le montre les différentes figures. Cependant, il est néanmoins tout à fait possible d'imaginer que le joint d'étanchéité 9 puisse être intégré directement à la zone d'appui 57.

Dans le cas où le joint d'étanchéité 9 est disposé dans une gorge au sein de la base 71, l'épaulement 51 peut comporter un chanfrein 55 sur son arrête extérieure en vis-à-vis de la base 71 du dispositif de fixation 7 (voir figures 2 et 3). Ce chanfrein 55 permet, lors du pivotement de la boite 5a, 5b, de ne pas accrocher le joint d'étanchéité 9 avec l'arrête de l'épaulement 51 et ainsi évite que ledit joint d'étanchéité 9 soit extirpé de la gorge et réduise l'étanchéité de la fixation.

Ainsi, on voit bien que du fait de la présence du rebord 73 sur un des cotés du dispositif de fixation 7 permet une fixation de la boite 5a, 5b sur le faisceau d'échange de chaleur 3 sur chacun de ses côtés et ce quelque soit la conformation de ladite boite 5a, 5b.

## Revendications

1. Procédé de fabrication d'un échangeur de chaleur (1), ledit échangeur de chaleur (1) comportant :
- un faisceau d'échange de chaleur (3) comprenant des tubes dans lesquels circule un premier fluide caloporteur entre une entrée (3a) et une sortie (3b) dudit premier fluide caloporteur,
- au moins une boite d'entrée (5a) ou de sortie (5b) d'un second fluide caloporteur et comportant une zone d'appui (57),
- au moins un dispositif de fixation (7) de la boite (5a, 5b) sur le faisceau d'échange de chaleur (3), ledit dispositif de fixation (7) comportant une base (71) sur laquelle est destinée à reposer la zone d'appui (57) de la boite (5a, 5b),
la boite (5a, 5b) comportant au moins un épaulement (51) orienté vers l'extérieur de ladite boite (5a, 5b) au niveau de sa zone d'appui (57) et le dispositif de fixation (7) comportant sur un de ses côtés au moins un rebord (73) orienté vers l'intérieur du faisceau d'échange de chaleur (3) et s'étendant parallèlement à la base (71),
ledit procédé étant **caractérisé en ce qu'**il comporte les étapes suivantes de mise en place d'au moins une boite (5a, 5b):
- mise en contact de l'épaulement (51) et du rebord (73) au niveau de la face dudit rebord (73) en vis-à-vis avec la base (71),
- pivotement de la boite (5a, 5b) autour de l'axe formé par le contact entre l'épaulement (51) et le rebord (73) de sorte que la zone d'appui (57) de la boite (5a, 5b) repose contre la base (71) du dispositif de fixation (7) et que l'épaulement (51) s'insère entre le rebord (73) et la base (51),
- fixation de la boite (5a, 5b) audit faisceau d'échange de chaleur (3).

2. Procédé de fabrication selon la revendication 1, **caractérisé en ce que** la fixation de la boite (5a, 5b) audit faisceau d'échange de chaleur (3) est réalisée par sertissage.

3. Procédé de fabrication selon l'une des revendications précédentes, **caractérisé en ce qu'**un joint d'étanchéité (9) est disposé entre la zone d'appui (57) de la boite (5a, 5b) et la base (71) du dispositif de fixation (7).

4. Procédé de fabrication selon la revendication précédente, **caractérisé en ce que** le joint d'étanchéité (9) est placé dans une gorge au sein de la base (71) du dispositif de fixation (7).

5. Procédé de fabrication selon la revendication précédente, **caractérisé en ce que** l'épaulement (51) comporte un chanfrein (55) sur son arrête extérieure en vis-à-vis de la base (71) du dispositif de fixation (7).

6. Procédé de fabrication selon l'une des revendications précédentes, **caractérisé en ce que** l'épaulement (51) comporte un renfoncement (53) sur sa face destinée à entrée au contact du rebord (73).

7. Procédé de fabrication selon l'une des revendications précédentes, **caractérisé en ce que** le dispositif de fixation (7) comporte une paroi latérale (75) et que le rebord (73) est réalisé par pliage de ladite paroi latérale (75) vers l'intérieur dudit dispositif de fixation (7).

8. Procédé de fabrication selon l'une des revendications 1 à 6, **caractérisé en ce que** le dispositif de fixation (7) comporte une paroi latérale (75) et que le rebord (73) est réalisé par formation d'au moins un orifice (79) dans la paroi latérale (75) du dispositif de fixation (7).

9. Procédé de fabrication selon l'une des revendications précédentes, **caractérisé en ce que** le dispositif de fixation (7) vient de matière avec le faisceau d'échange de chaleur (3).

10. Procédé de fabrication selon l'une des revendications 1 à 9, **caractérisé en ce que** le dispositif de fixation (7) est un collecteur fixé sur la périphérie du faisceau d'échange de chaleur (3).

11. Procédé de fabrication selon la revendication précédente, **caractérisé en ce que** le collecteur (7) présente un retrait (80) par rapport au bord du faisceau d'échange de chaleur (3).

## Patentansprüche

1. Verfahren zur Herstellung eines Wärmetauschers (1), wobei der Wärmetauscher (1) Folgendes umfasst:
- einen Wärmetauscherblock (3), der Rohre umfasst, in denen ein erstes Wärmetransportfluid zwischen einem Einlass (3a) und einem Auslass (3b) für das erste Wärmetransportfluid zirkuliert,
- mindestens einen Eingangs- (5a) oder Ausgangskasten (5b) für ein zweites Wärmetransportfluid, der einen Anlagebereich (57) umfasst,
- mindestens eine Vorrichtung (7) zur Befestigung des Kastens (5a, 5b) an dem Wärmetauscherblock (3), wobei die Befestigungsvorrichtung (7) eine Basis (71) umfasst, an der der Anlagebereich (57) des Kastens (5a, 5b) anliegen soll,
wobei der Kasten (5a, 5b) mindestens eine Schulter (51) umfasst, die zum Äußeren des Kastens (5a, 5b) bei seinem Anlagebereich (57) gerichtet ist und wobei die Befestigungsvorrichtung (7) auf einer ihrer Seiten mindestens einen Rand (73) umfasst, der zum Inneren des Wärmetauscherblocks (3) gerichtet ist und sich parallel zur Basis (71) erstreckt,
wobei das Verfahren **dadurch gekennzeichnet ist, dass** es die folgenden Schritte zum Einbau mindestens eines Kastens (5a, 5b) umfasst:
- Inkontaktbringen der Schulter (51) und des Rands (73) auf der Seite des Rands (73), die der Basis (71) gegenüberliegt,
- Schwenken des Kastens (5a, 5b) um die durch den Kontakt zwischen der Schulter (51) und dem Rand (73) gebildete Achse, so dass der Anlagebereich (57) des Kastens (5a, 5b) an der Basis (71) der Befestigungsvorrichtung (7) anliegt und die Schulter (51) zwischen dem Rand (73) und der Basis (51) eingeführt ist,
- Befestigen des Kastens (5a, 5b) an dem Wärmetauscherblock (3).

2. Herstellungsverfahren nach Anspruch 1, **dadurch gekennzeichnet, dass** die Befestigung des Kastens (5a, 5b) am Wärmetauscherblock (3) durch Crimpen erfolgt.

3. Herstellungsverfahren nach einem der vorhergehenden Ansprüche, **dadurch gekennzeichnet, dass** eine Dichtung (9) zwischen dem Anlagebereich (57) des Kastens (5a, 5b) und der Basis (71) der Befestigungsvorrichtung (7) angeordnet wird.

4. Herstellungsverfahren nach dem vorhergehenden Anspruch, **dadurch gekennzeichnet, dass** die Dichtung (9) in eine Nut in der Basis (71) der Befestigungsvorrichtung (7) platziert wird.

5. Herstellungsverfahren nach dem vorhergehenden Anspruch, **dadurch gekennzeichnet, dass** die Schulter (51) eine Anschrägung (55) an ihrer Außenkante gegenüber der Basis (71) der Befestigungsvorrichtung (7) umfasst.

6. Herstellungsverfahren nach einem der vorhergehenden Ansprüche, **dadurch gekennzeichnet, dass** die Schulter (51) eine Vertiefung (53) auf ihrer Seite, die mit dem Rand (73) in Kontakt kommen soll, umfasst.

7. Herstellungsverfahren nach einem der vorhergehenden Ansprüche, **dadurch gekennzeichnet, dass** die Befestigungsvorrichtung (7) eine Seitenwand (75) umfasst und dass der Rand (73) durch Falten der Seitenwand (75) zum Inneren der Befestigungsvorrichtung (7) hin erzeugt wird.

8. Herstellungsverfahren nach einem der Ansprüche 1-6, **dadurch gekennzeichnet, dass** die Befestigungsvorrichtung (7) eine Seitenwand (75) umfasst und dass der Rand (73) durch Ausbildung mindestens einer Öffnung (79) in der Seitenwand (75) der Befestigungsvorrichtung (7) erzeugt wird.

9. Herstellungsverfahren nach einem der vorhergehenden Ansprüche, **dadurch gekennzeichnet, dass** die Befestigungsvorrichtung (7) einstückig mit dem Wärmetauscherblock (3) ausgebildet ist.

10. Herstellungsverfahren nach einem der Ansprüche 1-9, **dadurch gekennzeichnet, dass** die Befestigungsvorrichtung (7) ein Sammler ist, der an der Peripherie des Wärmetauscherblocks (3) befestigt ist.

11. Herstellungsverfahren nach dem vorhergehenden Anspruch, **dadurch gekennzeichnet, dass** der Sammler (7) einen Versatz (80) zum Rand des Wärmetauscherblocks (3) aufweist.

## Claims

1. Method for manufacturing a heat exchanger (1), the said heat exchanger (1) comprising:
- a heat-exchange bundle (3) comprising tubes through which a first heat-transfer fluid circulates between an inlet (3a) and an outlet (3b) for the said first heat-transfer fluid,
- at least one inlet box (5a) or outlet box (5b) for a second heat-transfer fluid that comprises a bearing region (57),
- at least one device (7) for fastening the box (5a, 5b) to the heat-exchange bundle (3), the said fastening device (7) comprising a base (71) on which the bearing region (57) of the box (5a, 5b) is intended to rest,
the box (5a, 5b) comprising at least one shoulder (51) oriented towards the outside of the said box (5a, 5b) at its bearing region (57) and the fastening device (7) comprising on one of its sides at least one rim (73) oriented towards the inside of the heat-exchange bundle (3) and extending parallel to the base (71),
the said method being **characterized in that** it comprises the following steps for fitting at least one box (5a, 5b):
- bringing the shoulder (51) and the rim (73) into contact at the face of the said rim (73) opposite the base (71),
- pivoting the box (5a, 5b) about the axis formed by the contact between the shoulder (51) and the rim (73) such that the bearing region (57) of the box (5a, 5b) rests against the base (71) of the fastening device (7) and that the shoulder (51) is inserted between the rim (73) and the base (51),
- fastening the box (5a, 5b) to the said heat-exchange bundle (3).

2. Manufacturing method according to Claim 1, **characterized in that** the box (5a, 5b) is fastened to the said heat-exchange bundle (3) by crimping.

3. Manufacturing method according to one of the preceding claims, **characterized in that** a seal (9) is arranged between the bearing region (57) of the box (5a, 5b) and the base (71) of the fastening device (7).

4. Manufacturing method according to the preceding claim, **characterized in that** the seal (9) is placed in a groove within the base (71) of the fastening device (7).

5. Manufacturing method according to the preceding claim, **characterized in that** the shoulder (51) comprises a chamfer (55) on its outer edge opposite the base (71) of the fastening device (7).

6. Manufacturing method according to one of the preceding claims, **characterized in that** the shoulder (51) comprises a recess (53) on its face intended to come into contact with the rim (73).

7. Manufacturing method according to one of the preceding claims, **characterized in that** the fastening device (7) comprises a lateral wall (75) and **in that** the rim (73) is produced by folding the said lateral wall (75) towards the inside of the said fastening device (7).

8. Manufacturing method according to one of Claims 1 to 6, **characterized in that** the fastening device (7) comprises a lateral wall (75) and **in that** the rim (73) is produced by forming at least one orifice (79) in the lateral wall (75) of the fastening device (7).

9. Manufacturing method according to one of the preceding claims, **characterized in that** the fastening device (7) is formed integrally with the heat-exchange bundle (3).

10. Manufacturing method according to one of Claims 1 to 9, **characterized in that** the fastening device (7) is a header fastened to the periphery of the heat-exchange bundle (3).

11. Manufacturing method according to the preceding claim, **characterized in that** the header (7) has an offset (80) with respect to the edge of the heat-exchange bundle (3).
